# EUROPÄISCHE PATENTSCHRIFT

(11) **EP 2 996 854 B1**
(45) Veröffentlichungstag und Bekanntmachung des Hinweises auf die Patenterteilung: **21.06.2017**
(21) Anmeldenummer: 14738714.6
(22) Anmeldetag: 14.05.2014
(51) Int. Cl.: B29C 41/28, B29C 41/52, B29C 35/02, B29C 41/46, B29K 105/00, G01N 21/35

(54) **VERFAHREN ZUR HERSTELLUNG EINER FOLIE ODER EINES FILMES**
PROCESS FOR MANUFACTURING A SHEET OR A FILM
PROCÉDÉ DE FABRICATION D'UNE FEUILLE OU D'UN FILM

(30) Priorität: 15.05.2013 AT 503262013
(43) Veröffentlichungstag der Anmeldung: 23.03.2016
(73) Patentinhaber: Berndorf Band GmbH, 2560 Berndorf (AT)
(72) Erfinder: MORGENBESSER, Karl, A-2870 Aspang (AT); FLASCH, Hannes, A-2483 Ebreichsdorf (AT); PROSCHEK, Michael, A-2525 Schönau (AT)
(74) Vertreter: Burger, Hannes
(86) Internationale Anmeldenummer: PCT/AT2014/050117
(87) Internationale Veröffentlichungsnummer: WO 2014/183145

(56) Entgegenhaltungen:
- EP-A1- 1 134 063
- WO-A-84/01430
- WO-A1-2006/101251
- DE-A1-102010 021 260
- JP-A- S61 219 625
- US-A- 4 582 520
- US-A1- 2004 058 179
- US-A1- 2012 292 800

## Beschreibung

Die Erfindung betrifft ein Verfahren zur Herstellung einer Folie oder eines Filmes gemäß dem Oberbegriff von Anspruch 1. Ein Verfahren nach dem Oberbegriff des Anspruchs 1 ist aus der US2012/292800A1 bekannt. Weitere Verfahren bzw. Vorrichtungen der eingangs genannten Art sind aus der JPS62219625 A, der US4982500 A sowie der WO84/01430 A bekannt geworden. Verfahren bzw. Vorrichtungen der eingangs genannten Art kommen bei der Herstellung von Folien oder Filmen, beispielsweise Polyvinylalkohol-Folien (PVOH-Folien), wie sie beispielsweise in der Arzneimittelindustrie eingesetzt werden, oder Triacetatfilmen (TAC-Filme), welche beispielsweise für die Produktion von LCD-Bildschirmen verwendet werden, zum Einsatz. Hierbei läuft ein als Prozessband für das Auftragen und den Transport des Films dienendes Endlosband zwischen einer Antriebsrolle und einer Umlenkrolle um, zwischen welchen das Band eingespannt ist. Bei den bekannten Lösungen wird auf das Band ein Ausgangsmaterial in flüssiger Form aufgegossen. Das Material kann sodann auf der Bandoberfläche einen homogenen Film bilden, der dann weiteren Prozessschritten, wie Trocknen, Strecken, Beschneiden etc. unterworfen werden kann. Im Folgenden wird aus Gründen der einfacheren Lesbarkeit der Begriff "Film" stellvertretend auch für Folien und ganz allgemein für jegliche Art von flächigen, insbesondere platten- oder bandförmigen, ein- oder mehrschichtigen Gebilden fester Stoffe, die dehnbar oder undehnbar elastisch oder unelastisch ausgebildet sein können, verwendet.

Um eine hohe Produktionsgeschwindigkeit zu erzielen, werden die Filme meist in einem noch feuchten Zustand von dem Band abgezogen. Der Begriff "feucht" bezieht sich bei lösungsmittelbasierten Filmen auf den noch im Film enthaltenen Lösungsmittelanteil. So wäre beispielsweise bei einem vollständig getrockneten Film der Lösungsmittelanteil Null. Bei den bekannten Lösungen ist es jedoch nicht möglich, den Lösungsmittelanteil vor dem Abziehen des Filmes von dem Band zu ermitteln. Dies stellt jedoch einen großen Nachteil dar, da der Lösungsmittelgehalt bei lösungsmittelbasierten Filmen einen für die Qualität des abgezogenen Filmes wichtigen Parameter darstellt. Auch ist es mit den bekannten Lösungen nicht möglich, während des Produktionsprozesses ohne eine Unterbrechung desselben eine Veränderung der Prozessparameter zu messen.

Es ist daher eine Aufgabe der Erfindung, die oben genannten Nachteile zu überwinden.

Diese Aufgabe wird mit einem Verfahren der eingangs genannten Art erfindungsgemäß durch die Merkmale des kennzeichnenden Teils des Anspruchs 1 gelöst. Die Erfindung ermöglicht eine lückenlose Überwachung des Filmbildungsprozesses sowie eine exakte Lokalisierung eventuell auftretender Störungen.

Die erfindungsgemäße Lösung ermöglicht es, auf einfache Weise während des gesamten Produktionsprozesses durch ein spektrographische Analyse des Materials des Filmes Eigenschaften des Materials, wie dessen Aushärtungsgrad und/oder Trocknungsgrad und/oder seine Dicke und/oder seinen Lösungsmittelanteil sowie andere Prozessparameter wie Temperatur und Druck, etc. exakt zu erfassen, ohne durch die Messung in den Herstellungsprozess einzugreifen oder diesen nachteilig zu beeinflussen.

Als besonders vorteilhaft hat es sich herausgestellt, wenn in Schritt b) als spektroskopisches Verfahren ein Infrarot-Absorptions-Verfahren verwendet wird. Die Infrarotspektroskopie hat sich im Rahmen der Erfindung besonders bewährt, wenngleich auch andere spektroskopische Verfahren, wie beispielsweise Raman-Spektroskopie, verwendet werden können.

Gemäß einer Variante der Erfindung kann es vorgesehen sein, dass aus einem mittels des spektroskopischen Verfahrens erfassten Spektrums zumindest ein Ist-Wert für zumindest einen Parameter des Materials mit zumindest einem Sollwert verglichen wird. Entsprechend einer erfindungsgemäßen Weiterbildung kann in Abhängigkeit von einer Abweichung des Ist-Wertes von dem Sollwert ein Stellglied zur Veränderung einer Fördergeschwindigkeit des Bandes betätigt werden.

Eine bevorzugte Variante der Erfindung sieht vor, dass die Folie oder der Film ein lösungsmittelbasierter Film oder eine lösungsmittelbasierte Folie ist, wobei ein Verdampfen des Lösungsmittels eine Trocknung und/oder Aushärtung des Materials zur Folge hat und in Schritt b) an zumindest einer vordefinierten Messstelle der aktuelle Lösungsmittelgehalt des Materials erfasst wird.

Gemäß einer bevorzugten Variante der Erfindung können Intensitätswerten einzelner Wellenlängen oder Wellenlängenbereiche in einem Spektrum Werte für Parameter des Materials zugeordnet werden. Vorteilhafterweise ist der zumindest eine Parameter des Materials die Dicke des Materials und/oder ein Lösungsmittelgehalt des Materials.

Zum besseren Verständnis der Erfindung wird diese anhand der nachfolgenden Figuren näher erläutert.

Es zeigen jeweils in stark schematisch vereinfachter Darstellung:
- Fig. 1: eine erfindungsgemäße Vorrichtung;
- Fig. 2: ein Infrarotspektrum;
- Fig. 3: eine erste Tabelle mit Materialparametern und Werten von Zustandsgrößen, die verschiedenen Intensitätswerten einer Wellenlänge zugeordnet sind;
- Fig. 4: eine zweite Tabelle mit Materialparametern und Werten von Zustandsgrößen, die verschiedenen Intensitätswerten einer Wellenlänge zugeordnet sind.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

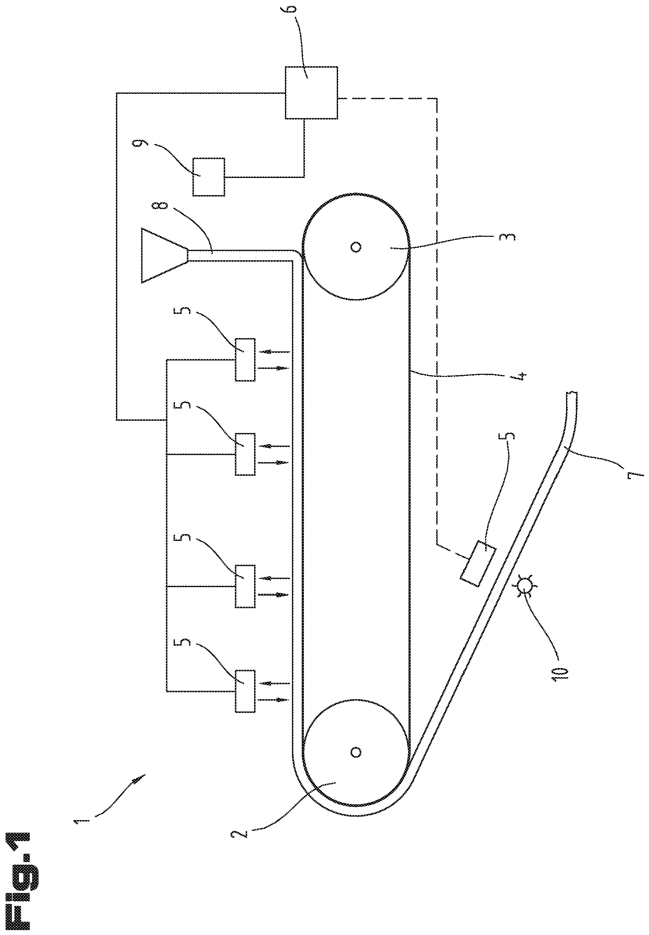

Gemäß Fig. 1 kann eine erfindungsgemäße Vorrichtung 1 ein zwischen einer Umlenktrommel 2 und einer Antriebstrommel 3 umlaufendes als Endlosband ausgebildetes Band 4 aufweisen. Die Erfindung ist jedoch nicht auf die Verwendung eines Endlosbandes eingeschränkt, so könnte unter Anderem beispielsweise auch ein an seinen Enden nicht verbundenes Band 4 verwendet werden, welches von einer Rolle abgewickelt und an einem Ende wieder aufgewickelt wird.

Die Vorrichtung 1 umfasst ein oder mehrere Spektrometer 5, bevorzugt optische Spektrometer, die mit einer Steuerung 6 der Vorrichtung 5 verbunden sind. An dieser Stelle sei erwähnt, dass im Rahmen der Erfindung auch nur ein Spektrometer 5 zum Einsatz kommen kann. Wenn im Folgenden von Spektrometern im Plural gesprochen wird, so bezieht sich die technische Lehre bezüglich der Messung und Auswertung der erfassten Spektren sinngemäß jedoch auch auf die Verwendung nur eines Spektrometers 5. Die Steuerung 6 kann mit einem Stellglied 9 verbunden sein, über welches Prozessparameter, wie etwa die Temperatur in einem bestimmten Bereich über dem Band 4 oder die Laufgeschwindigkeit des Bandes 4 etc. eingestellt werden können. So kann das Stellglied 9 beispielsweise eine Bremse sein, die auf die Antriebstrommel einwirkt oder eine Heizung etc.

Die Vorrichtung 1 wird dazu verwendet einen Film 7 herzustellen. Bei diesem Film kann es sich um einen lösungsmittelbasierten Film handeln, wie beispielsweise sogenannte TAC-Filme, PVOH-Filme etc. Als Lösungsmittel können beispielsweise im Fall von TAC -Filmen Dichlormethan (Methylenchlorid) oder im Fall von PVOH-Filmen Wasser verwendet werden.

Gemäß dem erfindungsgemäßen Verfahren wird zur Herstellung des Filmes 7 ein Material 8 in flüssiger Form auf das sich bewegende Band 4 aufgebracht. Das Aufbringen des Materials 8 kann durch Aufgießen, beispielsweise mittels Curtain Coating, Extrudieren, Aufsprühen etc. erfolgen. Das aufgegossene Material 8 bildet auf dem Band 4 eine filmförmige Schicht und durchläuft auf dem Band 4 einen Prozess, der zu einer zumindest teilweisen Trocknung und/oder Aushärtung des Materials 8 führt.

Mittels eines nicht invasiven spektroskopischen Verfahrens, welches sich der Spektrometer 5 bedient, können Eigenschaften des Materials 8 erfasst werden. Zusätzlich oder alternativ, jedoch nicht Teil der Erfindung, können thermische Zustandsgrößen einer definierten Umgebung um das Band 4 erfasst werden. Die definierte Umgebung des Bandes 4 kann beispielsweise durch einen Abstand des jeweiligen Spektrometers 5 von der Oberfläche des Bandes 4 festgelegt sein.

Bevorzugt handelt es sich bei dem spektroskopischen Verfahren um ein Infrarot-Absorptions-Verfahren. Besonders vorteilhaft hat sich im Rahmen der vorliegenden Erfindung ein fouriertransformations-infrarotspektroskopisches Verfahren im nahen Infrarotbereich herausgestellt.

Derartige Verfahren werden abgekürzt als FTNIR-spektroskopische Verfahren bezeichnet. Hierbei kommt als Spektrometer 5 ein Fourier-Transform-Infrarotspektrometer (FTIR-Spektrometer) zum Einsatz.

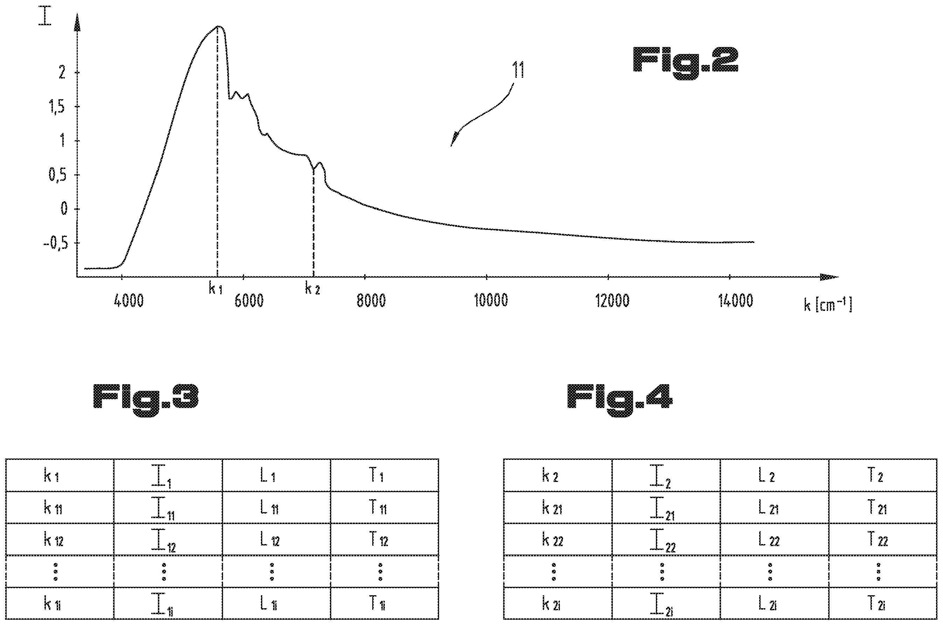

Das Material 8 wird mit Lichtwellenlängen aus dem nahen Infrarotbereich beleuchtet und mittels der Spektrometer 5 werden an unterschiedlichen Stellen der Vorrichtung 1 in an sich bekannter Weise entsprechende Absorptionsspektren gemessen. Erfolgt die Messung über dem Band 4 so kann eine anregende Lichtquelle über dem Band 4 angeordnet bzw. je nach Bauart auch in das jeweilige Spektrometer 5 integriert sein. Das emittierte Licht tritt durch das Material 8 durch und ein transmittierter Teil wird an der Oberfläche des Bandes 4, welches bevorzugt als Metallband mit einer geschlossenen Oberfläche ausgebildet sein kann, reflektiert. Ein Teil des Lichtes wird von dem Material 8 absorbiert. Die Richtungen des einfallenden und reflektierten Lichtes sind in Fig. 1 mit Pfeilen angedeutet. Aus dem auf das jeweilige Spektrometer 5 einfallenden Licht, welches von der Oberfläche des Bandes 4 reflektiert wird und durch das Material 8 in Richtung des entsprechenden Spektrometers 5 durchtritt, wird dann das in Fig. 2 dargestellte Spektrum 11 in Form eines NIR- Absorptionsspektrums erhalten. Erfolgt die Messung nicht über der (reflektierenden) Bandoberfläche sondern in einem Bereich, in dem das Material 8 schon als abgezogener Film 7 vorliegt, so muss eine Lichtquelle 10 gegenüber dem Spektrometer 5 angeordnet sein. Der Film 7 verläuft hierbei zwischen der Lichtquelle 10 und dem Spektrometer 5.

In Fig. 2 ist die Intensität über den Wellenzahlen k aufgetragen. In dem Spektrum 11 gibt es charakteristische Wellenzahlen k₁, k₂, die eine Aussage über einen bestimmten Materialparameter, wie beispielsweise den Lösungsmittelgehalt des Materials ermöglichen. Die charakteristischen Wellenzahlen k₁, k₂ liegen hierbei in Bereichen, in welchen beispielsweise ein verwendetes Lösungsmittel eine hohe Absorption aufweist.

Wie aus den Tabellen in Fig. 3 und 4 ersichtlich ist, können unterschiedlichen Intensitätswerten I₁, I₁₁, I_{12,} I_{1i,} I_{2,} I_{21,} I_{22,} I₂ᵢ einzelner charakteristischer Wellenlängen oder Wellenlängenbereiche in dem Spektrum 11 Werte für Parameter des Materials und/oder der Zustandsgrößen der definierten Umgebung um das Band 4 zugeordnet werden.

Die Zuordnung von einzelnen Parametern des Materials oder beispielsweise auch der Prozesstemperatur T₁, T_{11,} T_{12,} T_{1i,} T_{2,} T_{21,} T_{22,} T₂ᵢ an einer bestimmten Stelle des Prozesses lässt sich durch eine direkte Zuordnung der gemessenen Werte der Intensität für eine bestimmte Wellenzahl k_{1,} k_{12,} k_{1i,} k_{2,} k_{22,} k₂ᵢ zu einem konkreten Wert des Parameters oder der Temperatur durchführen. So kann beispielsweise der aktuelle Lösungsmittelgehalt L₁, L_{11,} L_{12,} L_{1i,} L_{2,} L_{21,} L₂₂, L₂ des Materials 8 beispielweise durch Abwiegen des Filmes gemessen werden und gleichzeitig die Intensitäten I₁, I₁₁, I_{12,} I_{1i,} I_{2,} I_{21,} I_{22,} I₂ᵢ der Wellenzahlen k₁ und k₂ oder die maximalen Intensitäten I₁, I₁₁, I_{12,} I_{1i,} I_{2,} I_{21,} I_{22,} I₂ᵢ in einem Bereich vorgebbarer Größe um diese Wellenzahlen ermittelt werden. Gleichzeitig kann auch die Prozesstemperatur in einer festgelegten Umgebung um das Band 4 gemessen werden. Diese Messungen können für unterschiedliche Lösungsmittelgehalte durchgeführt werden, sodass eine Zuordnung der Intensitätswerte I₁, I₁₁, I_{12,} I_{1i,} I_{2,} I_{21,} I_{22,} I₂ᵢ zu Lösungsmittelgehalten bzw. Temperaturen T₁, T_{11,} T_{12,} T_{1i,} T_{2,} T_{21,} T_{22,} T₂ᵢ durchgeführt werden kann wie in den Tabellen nach Fig. 3 und Fig. 4 dargestellt. An dieser Stelle sei auch erwähnt, dass ein Lösungsmittelgehalt und die Prozesstemperatur sehr stark miteinander korreliert sind, sodass aus dem Lösungsmittelgehalt auch auf die entsprechende Temperatur geschlossen werden kann. Grundsätzlich können auch andere Parameter den Intensitätswerten I₁, I₁₁, I_{12,} I_{1i,} I_{2,} I_{21,} I_{22,} I₂ᵢ zugeordnet werden, so kann beispielsweise auf die oben genannte Art auch eine Zuordnung der Intensitätswerte zu Materialdicken, die ebenfalls stark mit dem Lösungsmittelgehalt korreliert sind, oder einem Druck in der Umgebung des Bandes 4 sowie weiteren Prozessparametern erfolgen.

Die oben genannte Art der Informationsgewinnung aus dem Spektrum 11 stellt eine einfache Methode dar, aus dem Spektrum 11 unmittelbar die Werte entsprechender Prozessparameter zu erhalten. Selbstverständlich können aus dem Spektrum 11 auch unter Verwendung quantitativer Methoden der Signalverarbeitung Rückschlüsse auf die entsprechenden Werte der Prozessparameter gezogen werden.

Aus dem Spektrum 11 kann somit ein Ist-Wert für einen Parameter des Materials 8 ermittelt und mit einem Sollwert verglichen werden. Die Auswertung des Spektrums 11 und der Vergleich mit den Sollwerten kann von der Steuerung 6, beispielsweise einem entsprechend programmierten Mikro- oder Signalprozessor, durchgeführt werden. Die Sollwerte können in einem hier nicht dargestellten mit der Steuerung 6 verbundenen Speicher abgelegt sein. In Abhängigkeit von einer Abweichung des Ist-Wertes von dem Sollwert kann die Steuerung 6 das Stellglied 9 zur Veränderung einer Fördergeschwindigkeit des Bandes 4 betätigen. So kann die Steuerung 6 über das Stellglied 9 die Geschwindigkeit des Bandes 4 anpassen, um die Verweildauer des Materials 8 in dem Prozess zu erhöhen oder zu verringern.

Wenn der Film 7 ein lösungsmittelbasierter Film ist, hat das Verdampfen des Lösungsmittels während des Prozesses eine Trocknung und/oder Aushärtung des Materials 8 zur Folge. Als Ist-Wert kann in diesem Fall an einer Messstelle der aktuelle Lösungsmittelgehalt L₁, L_{11,} L_{12,} L_{1i,} L_{2,} L_{21,} L_{22,} L₂ᵢ des Materials 8 erfasst und mit einem Sollwert verglichen werden.

Durch die Verwendung mehrerer Spektrometer 5 kann die Strecke zwischen dem Aufbringen des Materials 8 und dem Abziehen des Films 7 in Abschnitte unterteilt werden, wobei jedem Abschnitt ein Spektrometer 5 zugeordnet sein kann. Jedem Spektrometer 5 kann hierbei ein eigener Satz von Sollwerten zugeordnet sein. Auf diese Weise lässt sich eine eventuell auftretende Abweichung von Ist-Werten und Sollwerten örtlich genau zuordnen, wodurch in den Prozess gezielt eingegriffen werden kann.

Der Ordnung halber sei darauf hingewiesen, dass zum besseren Verständnis des Aufbaus der erfindungsgemäßen Vorrichtung diese bzw. deren Bestandteile teilweise unmaßstäblich und/oder vergrößert und/oder verkleinert dargestellt wurden.

### Bezugszeichenaufstellung

- 1: Vorrichtung
- 2: Umlenkrolle
- 3: Antriebsrolle
- 4: Band
- 5: Spektroskop
- 6: Steuerung
- 7: Film
- 8: Material
- 9: Stellglied
- 10: Lichtquelle
- 11: Spektrum
- I₁, I₁₁, I_{12,} I_{1i,}: Intensitätswerte
- I_{2,} I_{21,} I_{22,} I₂ᵢ: Intensitätswerte
- k_{1,} k_{12,} k_{1i,}: Wellenzahlen
- k_{2,} k_{22,} k₂ᵢ: Wellenzahlen
- L₁, L_{11,} L_{12,} L₁ᵢ: Lösungsmittelgehalt
- L_{2,} L_{21,} L_{22,} L₂ᵢ: Lösungsmittelgehalt
- T₁, T_{11,} T_{12,} T₁ᵢ: Temperatur
- T_{2,} T_{21,} T_{22,} T₂ᵢ: Temperatur

## Patentansprüche

1. Verfahren zur Herstellung einer Folie oder eines Filmes (7), umfassend die aufeinanderfolgenden Schritte
a) Aufbringen zumindest eines Materials (8) zur Herstellung der Folie oder des Filmes (7) auf ein sich bewegendes Band (4),
b) zumindest teilweises Aushärten- und/oder teilweises Trocknen des Materials (8), wobei während Schritt b) mittels zumindest eines nicht invasiven spektroskopischen Verfahrens Eigenschaften des Materials (8) erfasst werden, wobei das Material (8) an einer ersten Stelle auf das Band (4) aufgegossen und das zumindest teilweise ausgehärtete und/oder getrocknete Material (8) an einer zweiten Stelle von dem Band (4) abgezogen wird, **dadurch gekennzeichnet, dass** eine zwischen der ersten und der zweiten Stelle gelegene Strecke in Abschnitte gleicher oder unterschiedlicher Größe unterteilt wird und in jedem der Abschnitte in vorgebbaren Zeitintervallen Parameter des Materials (8) erfasst werden.

2. Verfahren nach Anspruch 1, **dadurch gekennzeichnet, dass** in Schritt b) als spektroskopisches Verfahren ein Infrarot-Absorptions-Verfahren verwendet wird.

3. Verfahren nach Anspruch 1 oder 2, **dadurch gekennzeichnet, dass** aus einem mittels des spektroskopischen Verfahrens erfassten Spektrums (11) zumindest ein Ist-Wert für zumindest einen Parameter des Materials (8) ermittelt und mit zumindest einem Sollwert verglichen wird.

4. Verfahren nach Anspruch 3, **dadurch gekennzeichnet, dass** in Abhängigkeit von einer Abweichung des Ist-Wertes von dem Sollwert ein Stellglied (6) zur Veränderung einer Fördergeschwindigkeit des Bandes (4) betätigt wird.

5. Verfahren nach einem der Ansprüche 1 bis 4, **dadurch gekennzeichnet, dass** die Folie oder der Film (7) ein lösungsmittelbasierter Film oder eine lösungsmittelbasierte Folie ist, wobei ein Verdampfen eines Lösungsmittels eine Trocknung und/oder Aushärtung des Materials (8) zur Folge hat und in Schritt b) an zumindest einer vordefinierten Messstelle der aktuelle Lösungsmittelgehalt (L₁, L_{11,} L_{12,} L_{1i,} L_{2,} L_{21,} L_{22,} L₂ᵢ) des Materials (8) erfasst wird.

6. Verfahren nach einem der Ansprüche 1 bis 5, **dadurch gekennzeichnet, dass** Intensitätswerten (I₁, I₁₁, I_{12,} I_{1i,} I_{2,} I_{21,} I_{22,} I₂ᵢ) einzelner Wellenlängen oder Wellenlängenbereiche in einem Spektrum Werte für Parameter des Materials zugeordnet werden.

7. Verfahren nach einem der Ansprüche 3 bis 6, **dadurch gekennzeichnet, dass** der zumindest eine Parameter des Materials (8) eine Dicke des Materials ist.

## Claims

1. Method for producing a foil or a film (7), comprising the following steps
a) applying at least one material (8) for producing the foil or film (7) to a moving belt (4),
b) at least partially curing and/or partially drying the material (8), wherein during step b) properties of the material (8) are recorded by means of at least one non-invasive spectro-scopic method, wherein
the material (8) is poured onto the belt (4) at a first point and the at least partially cured and/or dried material (8) is removed from the belt (4) at a second point, **characterized in that** a distance covered between the first and second point is divided into sections of the same or a different size and parameters of the material (8) are recorded in each of the sections at predefinable intervals.

2. Method according to claim 1, **characterized in that** in step b) an infrared absorption method is used as the spectroscopic method.

3. Method according to claim 1 or 2, **characterized in that** from a spectrum (11) recorded by means of the spectroscopic method, at least one actual value for at least one parameter of the material (8) is determined and compared with at least one desired value.

4. Method according to claim 3, **characterized in that** depending on a variance of the actual value from the desired value, an actuator (6) is activated in order to change a conveying speed of the belt (4).

5. Method according to one of claims 1 to 4, **characterized in that** the foil or film (7) is a solvent-based film or a solvent-based foil, wherein evaporation of a solvent results in drying and/or curing of the material (8) and in step b), the current solvent content (L₁, L₁₁, L₁₂, L₁ᵢ, L₂, L₂₁, L₂₂, L₂ᵢ) of the material (8) is recorded at at least one predefined measurement point.

6. Method according to one of claims 1 to 5, **characterized in that** intensity values (I₁, I₁₁, I₁₂, I₁ᵢ, I₂, I₂₁, I₂₂, I₂ᵢ) of individual wavelengths or wavelength ranges in a spectrum are assigned values for parameters of the material.

7. Method according to one of claims 3 to 6, **characterized in that** the at least one parameter of the material (8) is a thickness of the material.

## Revendications

1. Procédé pour la fabrication d'une feuille ou d'un film (7), comprenant les étapes successives consistant à :
a) appliquer au moins un matériau (8) pour la fabrication de la feuille ou du film (7) sur une bande en mouvement (4),
b) au moins durcir partiellement et/ou sécher partiellement le matériau (8), dans lequel au cours de l'étape b), au moyen d'au moins un procédé spectroscopique non-invasif, sont enregistrées des caractéristiques du matériau (8), dans lequel le matériau (8) est versé sur la bande (4) en un premier emplacement, et le matériau (8) au moins partiellement durci et/ou séché est retiré de la bande (4) en un second emplacement, **caractérisé en ce qu'**un trajet entre le premier et le second emplacement est divisé en tronçons de même taille ou d'une taille différente, et un paramètre du matériau (8) est enregistré dans chacune des tronçons à des intervalles de temps prédéterminés.

2. Procédé selon la revendication 1, **caractérisé en ce que** dans l'étape b), un procédé d'absorption de l'infrarouge est utilisé en tant que procédé spectroscopique.

3. Procédé selon la revendication 1 ou 2, **caractérisé en ce que** d'après un spectre (11) enregistré au moyen d'un procédé spectroscopique, au moins une valeur réelle pour au moins un paramètre du matériau (8) est établie, et est comparée à au moins une valeur cible.

4. Procédé selon la revendication 3, **caractérisé en ce qu'**en fonction d'un écart entre la valeur réelle et la valeur cible, un actionneur (6) est actionné pour un changement d'une vitesse de transport de la bande (4).

5. Procédé selon l'une quelconque des revendications 1 à 4, **caractérisé en ce que** la feuille ou le film (7) est un film à base de solvant ou une feuille à base de solvant, dans lequel une vaporisation d'un solvant a pour conséquence un séchage et/ou durcissement du matériau (8), et à l'étape b), au niveau d'au moins un emplacement de mesure prédéfini, la teneur en solvant actuelle (L₁, L₁₁, L₁₂, L₁ᵢ, L₂, L₂₁, L₂₂, L₂ᵢ) du matériau (8) est enregistrée.

6. Procédé selon l'une quelconque des revendications 1 à 5, **caractérisé en ce que** des valeurs d'intensité (I₁, I₁₁, I₁₂, I₁ᵢ, I₂, I₂₁, I₂₂, I₂ᵢ) sont associées à des longueurs d'onde ou plages de longueurs d'onde individuelles dans des valeurs de spectre pour un paramètre du matériau.

7. Procédé selon l'une quelconque des revendications 3 à 6, **caractérisé en ce que** le au moins un paramètre du matériau (8) est une épaisseur du matériau.
